Europäisches Patentamt

European Patent Office

Office européen des brevets

(11) Publication number: **0 446 752 A1**

# EUROPEAN PATENT APPLICATION

(21) Application number: 91103221.7

(22) Date of filing: 04.03.91

(51) Int. Cl.⁵: **C08K 7/14**, C08L 23/10

(30) Priority: 13.03.90 JP 62312/90

(43) Date of publication of application:
18.09.91 Bulletin 91/38

(84) Designated Contracting States:
DE FR GB IT

(71) Applicant: MITSUBISHI PETROCHEMICAL CO.,
LTD.
5-2, Marunouchi 2-chome
Chiyoda-ku Tokyo(JP)

(72) Inventor: Takefumi, Uematsu, c/o Mitsubishi
Petrochemical Co., Ltd., 1, Toho-cho
Yokkaichi-shi, Mie(JP)
Inventor: Yasuyuki, Ohgi, c/o Mitsubishi
Petrochemical Co., Ltd., 1, Toho-cho
Yokkaichi-shi, Mie(JP)
Inventor: Kazunobu, Nakamori, c/o Mitsubishi
Petrochemical Co., Ltd., 1, Toho-cho
Yokkaichi-shi, Mie(JP)
Inventor: Takeyuki, Uchida, c/o Mitsubishi
Petrochemical Co., Ltd., 1, Toho-cho
Yokkaichi-shi, Mie(JP)

(74) Representative: Hansen, Bernd, Dr.
Dipl.-Chem. et al
Hoffmann, Eitle & Partner Patent- und
Rechtsanwälte Arabellastrasse 4 Postfach
81 04 20
W-8000 München 81(DE)

(54) Polypropylene resin composition for blow molding.

(57) A polypropylene resin composition for blow molding is disclosed, which is obtained by melt-kneading from 75 to 95% by weight of a polypropylene resin having a melt flow rate of from 4 to 15 g/10 min and from 5 to 25% by weight of glass fiber, the glass fiber dispersed in said composition having an average diameter of from 5 to 15 $\mu$m and an average length of from 0.5 to 1.5 mm. The polypropylene resin composition, when extruded to form a parison, has excellent drawdown resistance and excellent extensibility, and provides blow-molded articles having satisfactory strength at the pinch-off tail thereof and excellent rigidity.

EP 0 446 752 A1

FILED OF THE INVENTION

The present invention relates to a polypropylene resin composition for blow molding which comprises a polypropylene resin and glass fiber. More particularly, the invention relates to a polypropylene resin composition which has excellent characteristics required for blow molding, such as drawdown resistance and extensibility of a parison and strength of a pinch-off tail of a molded article, and provides molded articles having excellent rigidity.

The resin composition of the present invention is useful, for example, for the production of automobile parts of continuous length which are required to have high rigidity, such as bumpers.

BACKGROUND OF THE INVENTION

Conventionally employed polypropylene resins for blow molding have a low melt flow rate of from about 0.5 to about 2 g/10 min from the standpoint of drawdown resistance of a parison. In order to impart rigidity, such a polypropylene resin having a low melt flow rate has been compounded with glass fiber.

The amount of glass fiber to be incorporated has had to be limited to 10% by weight or less. Otherwise, there would arise various problems, such as instability of parison extrusion from an extruder, instability of drawdown resistance of a parison attributed to insufficient dispersion of glass fiber in the resin composition, insufficient extensibility leading to local breaks of a parison, and reduction in strength of a pinch-off tail (hereinafter referred to as pinch-off strength) of a molded article. Therefore, rigidity of the resulting molded articles were still unsatisfactory.

SUMMARY OF THE INVENTION

Accordingly, an object of the present invention is to provide a polypropylene resin composition for blow molding which has excellent characteristics required in blow molding, such as drawdown resistance and extensibility of a parison and pinch-off strength of a molded article, and provides molded articles having excellent rigidity.

In order to overcome the above-described problems associated with conventional polypropylene resin compositions for blow molding, the inventors have conducted extensive investigations. As a result, it has now been found that the above object of the present invention is accomplished by a polypropylene resin composition for blow molding which is obtainable by melt-kneading from 75 to 95% by weight of a polypropylene resin having a melt flow rate of from 4 to 15 g/10 min and from 5 to 25% by weight of glass fiber, the glass fiber dispersed in said composition having an average diameter of from 5 to 15 $\mu$m and an average length of from 0.5 to 1.5 mm.

DETAILED DESCRIPTION OF THE INVENTION

The polypropylene resin which can be used in the present invention includes a homopolymer of propylene and a random or block copolymer of propylene and other $\alpha$-olefins, e.g., ethylene and butene-1. The polypropylene resin has a melt flow rate of from 4 to 15 g/10 min, and preferably from 5 to 10 g/10 min.

The melt flow rate of the polypropylene resin used in the present invention was measured at 230°C under a load of 2.16 kg in accordance with JIS K6758.

If the melt flow rate is less than 4 g/10 min, a parison of the composition has insufficient extensibility, and the resulting molded article has insufficient pinch-off strength. If it exceeds 15 g/10 min, a parison of the composition has insufficient drawdown resistance.

Glass fiber which can be used in the present invention is one generally used as a reinforcement for thermoplastic resins and has an average diameter of from 5 to 15 $\mu$m and an average length of from about 3 to about 50 mm.

The polypropylene resin is used in an amount of from 75 to 95% by weight, and preferably from 80 to 90% by weight, based on the sum of the polypropylene resin and the glass fiber. Glass fiber is incorporated into the polypropylene resin in an amount of from 5 to 25% by weight, and preferably from 10 to 20% by weight, based on the sum of the polypropylene resin and the glass fiber.

If the proportion of glass fiber exceeds 25% by weight, a parison of the composition has insufficient drawdown resistance and insufficient extensibility, and the resulting molded article has insufficient pinch-off strength. If it is less than 5% by weight, molded articles having excellent rigidity cannot be obtained.

It is preferable that the polypropylene resin composition of the present invention further contains from 5

2

to 30 parts by weight of high-density polyethylene having a melt flow rate of from 0.01 to 0.5 g/10 min as measured at 190°C under a load of 2.16 kg according to JIS K6760 per 100 parts by weight of the sum of the polypropylene resin and glass fiber.

The composition of the present invention is obtained by melt-kneading the polypropylene resin and glass fiber at a temperature above the melting point of the polypropylene resin by means of a mixing apparatus commonly employed for melt-kneading of thermoplastic resins, e.g., a single-screw extruder, a twin-screw extruder, a Banbury mixer, a kneader, etc.

While the glass fiber is unavoidably cut during melt-kneading, it is required that the glass fiber dispersed in the composition should have an average length between 0.5 mm and 1.5 mm, and preferably between 0.8 mm and 1.5 mm. It is difficult to make glass fibers retain its average length over 1.5 mm.

If the average length of glass fiber in the composition is less than 0.5 mm, a parison of the composition has insufficient drawdown resistance, and the resulting molded article has unsatisfactory rigidity.

In the polypropylene resin composition according to the present invention, glass fiber has satisfactory dispersibility owing to the high melt flow rate of the polypropylene resin matrix. Hence, even with a high compounding ratio of glass fiber, a parison of the composition is excellent in drawdown resistance and extensibility, and the resulting molded article has satisfactory pinch-off strength. As a result, molded articles having excellent rigidity can be produced from the composition.

The present invention is now illustrated in greater detail with reference to Examples, but it should be understood that the present invention is not deemed to be limited thereto. All the percents, parts, and ratios are given by weight unless otherwise indicated.

Physical properties of the compositions and molded articles obtained were determined as follows.

1) Drawdown Resistance:

A parison was extruded from a blow molding machine used in Examples to a length of 1000 mm. Extrusion was stopped and, after 10 seconds, the length of the parison was measured.

2) Extensibility:

A ratio of difference between an average wall thickness and the maximum wall thickness or the minimum wall thickness to the average wall thickness of a molded article was obtained.

3) Pinch-off Strength:

Tensile strength of the pinch-off part of a molded article was measured according to JIS K7113. A ratio of the measured value to that of a body of the article was obtained.

4) Flexural Modulus:

Measured according to JIS K7203.

EXAMPLE 1

Eighty percents of a propylene-ethylene block copolymer resin (ethylene content: 15%) having a melt flow rate of 6.5 g/10 min and 20% of glass fiber having an average diameter of 13 $\mu$m and an average length of 6 mm were dry blended, and the blend was melt-kneaded in a single-screw extruder having a diameter of 50 mm at 230°C to obtain pellets.

By using a blow molding machine, the pellets were melt-extruded at 210°C to form a parison having a length of about 1000 mm and a diameter of about 300 mm and then blown to obtain a rectangular container of about 1000 mm in length, about 800 mm in width, and about 20 mm in depth.

The glass fiber dispersed within the resulting molded article was found to have an average length of 0.9 mm.

The results of measurements of physical properties of the composition and the resulting molded article are shown in Table 1 below.

EXAMPLE 2

Seventy-five percents of a propylene-ethylene block copolymer resin (ethylene content: 8%) having a melt flow rate of 10 g/10 min, 25% of the same glass fiber as used in Example 1, and 25 parts, per 100 parts of the sum of the copolymer resin and glass fiber, of high-density polyethylene (melt flow rate: 0.25 g/10 min; density: 0.950 g/cm$^3$) were dry blended and pelletized in the same manner as in Example 1. The resulting pellets were blow-molded in the same manner as in Example 1.

The glass fiber dispersed within the resulting molded article was found to have an average length of 0.8 mm.

The results of measurements of physical properties of the composition and the resulting molded article are shown in Table 1 below.

COMPARATIVE EXAMPLE 1

Ninety percents of a propylene-ethylene block copolymer (ethylene content: 5%) having a melt flow rate of 0.5 g/10 min and 10% of the same glass fiber as used in Example 1 were dry blended and pelletized in the same manner as in Example 1. The resulting pellets were blow-molded in the same manner as in Example 1.

The glass fiber dispersed within the resulting molded article was found to have an average length of 0.4 mm.

The results of measurements of physical properties of the composition and the resulting molded article are shown in Table 1 below.

COMPARATIVE EXAMPLE 2

Pellets prepared in the same manner as in Comparative Example 1, except for changing the copolymer resin to glass fiber ratio to 80:20, were subjected to blow molding. However, because glass fiber had insufficient dispersibility, it was impossible to extrude a uniform parison, and the parison was locally broken on air blowing, failing to carry out blow-molding.

## TABLE 1

| | Example 1 | Example 2 | Comparative Example 1 |
|---|---|---|---|
| Drawdown Resistance (mm) | 1020 | 1010 | 1200 |
| Extensibility (%) | ±8 | ±12 | ±25 |
| Pinch-off Strength (%) | 35 | 31 | 32 |
| Flexural Modulus (kg/cm$^2$) | 30,000 | 30,000 | 18,000 |

While the invention has been described in detail and with reference to specific examples thereof, it will be apparent to one skilled in the art that various changes and modifications can be made therein without departing from the spirit and scope thereof.

## Claims

1. A polypropylene resin composition for blow molding which is obtainable by melt-kneading from 75 to 95% by weight of a polypropylene resin having a melt flow rate of from 4 to 15 g/10 min and from 5 to 25% by weight of glass fiber, the glass fiber dispersed in said composition having an average diameter of from 5 to 15 $\mu$m and an average length of from 0.5 to 1.5 mm.

2. A polypropylene resin composition as claimed in Claim 1, wherein said polypropylene resin is a propylene-ethylene block copolymer.

3. A polypropylene resin composition as claimed in Claim 1, wherein said polypropylene resin has a melt flow rate of from 5 to 10 g/10 min.

4. A polypropylene resin composition as claimed in Claim 1, wherein said glass fiber has an average length of from 0.8 to 1.5 mm.

5. A polypropylene resin composition as claimed in Claim 1, wherein from 80 to 90% by weight of said polypropylene resin and from 10 to 20% by weight of said glass fiber are melt-kneaded.

6. A polypropylene resin composition as claimed in Claim 1, wherein said composition further contains from 5 to 30 parts by weight of high-density polyethylene per 100 parts by weight of the sum of the polypropylene resin and glass fiber.

7. A polypropylene resin composition as claimed in Claim 6, wherein said high-density polyethylene has a melt flow rate of from 0.01 to 0.5 g/10 min.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 603 153 (SOBAJIMA & ICHIKAWA) <br> * column 9, line 65 - column 12, line 3; claims 1-13 * <br> – – – | 1-7 | C 08 K 7/14 <br> C 08 L 23/10 |
| A | US-A-4 764 707 (CHING WEI) <br> * Whole Document * <br> – – – – – | 1-7 | |

| | |
|---|---|
| | TECHNICAL FIELDS SEARCHED (Int. Cl.5) |
| | C 08 K <br> C 08 L |

The present search report has been drawn up for all claims

| Place of search | Date of completion of search | Examiner |
|---|---|---|
| The Hague | 20 June 91 | WILSON A.J.D. |